(19) Europäisches Patentamt
European Patent Office
Office européen des brevets

(11) **EP 2 963 986 A1**

(12) **EUROPEAN PATENT APPLICATION**

(43) Date of publication:
06.01.2016 Bulletin 2016/01

(51) Int Cl.:
*H04W 74/08* (2009.01)  *H04W 92/18* (2009.01)

(21) Application number: **15174533.8**

(22) Date of filing: **30.06.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **30.06.2014 US 201462019051 P**

(71) Applicant: **Innovative Sonic Corporation Taipei City 11491 (TW)**

(72) Inventors:
• **PAN, Li-Te**
  **11491 Taipei City (TW)**
• **KUO, Richard Lee-Chee**
  **11491 Taipei City (TW)**
• **CHEN, Wei-Yu**
  **11491 Taipei City (TW)**

(74) Representative: **Hoefer & Partner Patentanwälte mbB**
**Pilgersheimer Straße 20**
**81543 München (DE)**

(54) **METHOD AND APPARATUS FOR PERFORMING A RANDOM ACCESS (RA) PROCEDURE FOR A DEVICE-TO-DEVICE (D2D) COMMUNICATION**

(57)    A method and apparatus are disclosed for performing a RA procedure for a D2D communication. The method includes the UE transmitting a third message to a network, wherein the third message includes at least a first identification of the UE (615). The method also includes the UE determining that a contention resolution of the RA procedure is successful if the UE receives a fourth message addressed to a second identification of the UE from the network, wherein the first identification is different from the second identification (620).

```
                    START              600

605
An UE transmits a first message to a network, wherein the first message is a
RA preamble

610
The UE receives a second message from the network, wherein the second
message is a RA response

615
The UE transmits a third message to a network, wherein the third message
includes at least a first identification of the UE

620
The UE determines that a contention resolution of the RA procedure is
successful if the UE receives a fourth message addressed to a second
identification of the UE from the network

                    END
```

FIG. 6

EP 2 963 986 A1

## Description

### CROSS-REFERENCE TO RELATED APPLICATIONS

The present Application claims the benefit of U.S. Provisional Patent Application Serial No. 62/019,051 filed on June 30, 2014, the entire disclosure of which is incorporated herein by reference.

### FIELD

This disclosure generally relates to wireless communication networks, and more particularly, to a method and apparatus for performing a RA procedure for a D2D communication.

### BACKGROUND

With the rapid rise in demand for communication of large amounts of data to and from mobile communication devices, traditional mobile voice communication networks are evolving into networks that communicate with Internet Protocol (IP) data packets. Such IP data packet communication can provide users of mobile communication devices with voice over IP, multimedia, multicast and on-demand communication services.

An exemplary network structure for which standardization is currently taking place is an Evolved Universal Terrestrial Radio Access Network (E-UTRAN). The E-UTRAN system can provide high data throughput in order to realize the above-noted voice over IP and multimedia services. The E-UTRAN system's standardization work is currently being performed by the 3GPP standards organization. Accordingly, changes to the current body of 3GPP standard are currently being submitted and considered to evolve and finalize the 3GPP standard.

### SUMMARY

Methods and apparatus are disclosed for performing a RA procedure for a D2D communication herein and are defined in independent claims 1, 5 and 14, respectively. The respective dependent claims define preferred embodiments thereof, respectively. The method according to one aspect includes the UE transmitting a third message to a network, wherein the third message includes at least a first identification of the UE. This method also includes the UE determining that a contention resolution of the RA procedure is successful if the UE receives a fourth message addressed to a second identification of the UE from the network, wherein the first identification is different from the second identification.

### BRIEF DESCRIPTION OF THE DRAWINGS

FIG. 1 shows a diagram of a wireless communication system according to one exemplary embodiment.

FIG. 2 is a block diagram of a transmitter system (also known as access network) and a receiver system (also known as user equipment or UE) according to one exemplary embodiment.

FIG. 3 is a functional block diagram of a communication system according to one exemplary embodiment.

FIG. 4 is a functional block diagram of the program code of FIG. 3 according to one exemplary embodiment.

FIG. 5 is a reproduction of Figure 2 of 3GPP R2-141256.

FIG. 6 is a flow chart according to one exemplary embodiment.

FIG. 7 is a flow chart according to one exemplary embodiment.

### DETAILED DESCRIPTION

The exemplary wireless communication systems and devices described below employ a wireless communication system, supporting a broadcast service. Wireless communication systems are widely deployed to provide various types of communication such as voice, data, and so on. These systems may be based on code division multiple access (CDMA), time division multiple access (TDMA), orthogonal frequency division multiple access (OFDMA), 3GPP LTE (Long Term Evolution) wireless access, 3GPP LTE-A or LTE-Advanced (Long Term Evolution Advanced), 3GPP2 UMB (Ultra Mobile Broadband), WiMax, or some other modulation techniques.

In particular, the exemplary wireless communication systems devices described below may be designed to support one or more standards such as the standard offered by a consortium named "3rd Generation Partnership Project" referred to herein as 3GPP, including the RAN1#77 Chairman's Notes; SP-110638, "WID on Proposal for a study on Proximity-based Services"; R2-141256, "Layer 2 procedures for D2D Communication", Ericsson; and TS 36.321 V11.2.0, "Medium Access Control (MAC) protocol specification". The standards and documents listed above are hereby expressly incorporated by reference in their entirety.

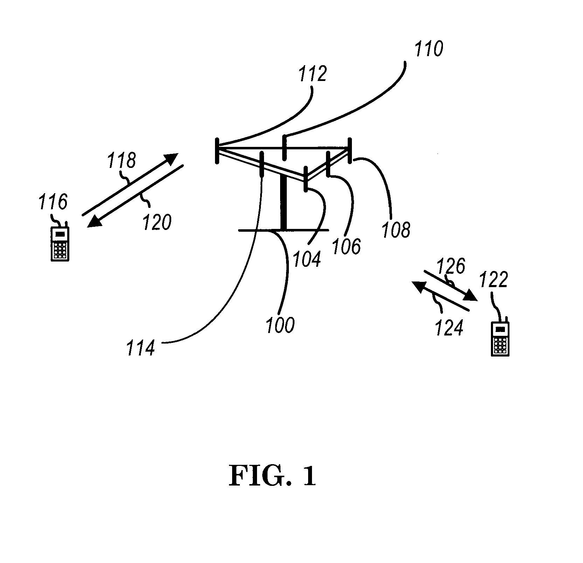

FIG. 1 shows a multiple access wireless communication system according to one embodiment of the invention. An access network 100 (AN) includes multiple antenna groups, one including 104 and 106, another including 108 and 110, and an additional including 112 and 114. In FIG. 1, only two antennas are shown for each antenna group, however, more or fewer antennas may be utilized for each antenna group. Access terminal 116 (AT) is in communication with antennas 112 and 114, where antennas 112 and 114 transmit information to access terminal 116 over forward link 120 and receive information from access terminal 116 over reverse link 118. Access terminal (AT) 122 is in communication with antennas 106 and 108, where antennas 106 and 108 transmit information to access terminal (AT) 122 over forward link 126 and receive information from access terminal (AT) 122 over reverse link 124. In a FDD system, communication links 118, 120, 124 and 126 may use different frequency for communication. For example, forward link 120 may use a different frequency then that used by reverse link 118.

Each group of antennas and/or the area in which they are designed to communicate is often referred to as a sector of the access network. In the embodiment, antenna groups each are designed to communicate to access terminals in a sector of the areas covered by access network 100.

In communication over forward links 120 and 126, the transmitting antennas of access network 100 may utilize beamforming in order to improve the signal-to-noise ratio of forward links for the different access terminals 116 and 122. Also, an access network using beamforming to transmit to access terminals scattered randomly through its coverage causes less interference to access terminals in neighboring cells than an access network transmitting through a single antenna to all its access terminals.

An access network (AN) may be a fixed station or base station used for communicating with the terminals and may also be referred to as an access point, a Node B, a base station, an enhanced base station, an evolved Node B (eNB), or some other terminology like network. An access terminal (AT) may also be called user equipment (UE), a wireless communication device, terminal, access terminal or some other terminology.

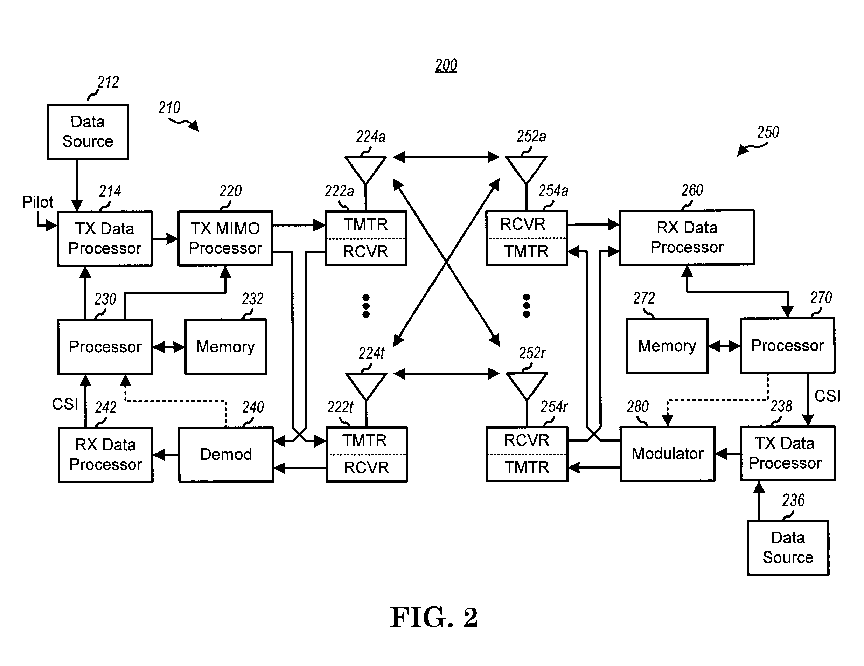

FIG. 2 is a simplified block diagram of an embodiment of a transmitter system 210 (also known as the access network) and a receiver system 250 (also known as access terminal (AT) or user equipment (UE)) in a MIMO system 200. At the transmitter system 210, traffic data for a number of data streams is provided from a data source 212 to a transmit (TX) data processor 214.

In one embodiment, each data stream is transmitted over a respective transmit antenna. TX data processor 214 formats, codes, and interleaves the traffic data for each data stream based on a particular coding scheme selected for that data stream to provide coded data.

The coded data for each data stream may be multiplexed with pilot data using OFDM techniques. The pilot data is typically a known data pattern that is processed in a known manner and may be used at the receiver system to estimate the channel response. The multiplexed pilot and coded data for each data stream is then modulated (i.e., symbol mapped) based on a particular modulation scheme (e.g., BPSK, QPSK, M-PSK, or M-QAM) selected for that data stream to provide modulation symbols. The data rate, coding, and modulation for each data stream may be determined by instructions performed by processor 230.

The modulation symbols for all data streams are then provided to a TX MIMO processor 220, which may further process the modulation symbols (e.g., for OFDM). TX MIMO processor 220 then provides $N_T$ modulation symbol streams to $N_T$ transmitters (TMTR) 222a through 222t. In certain embodiments, TX MIMO processor 220 applies beamforming weights to the symbols of the data streams and to the antenna from which the symbol is being transmitted.

Each transmitter 222 receives and processes a respective symbol stream to provide one or more analog signals, and further conditions (e.g., amplifies, filters, and upconverts) the analog signals to provide a modulated signal suitable for transmission over the MIMO channel. $N_T$ modulated signals from transmitters 222a through 222t are then transmitted from $N_T$ antennas 224a through 224t, respectively.

At receiver system 250, the transmitted modulated signals are received by $N_R$ antennas 252a through 252r and the received signal from each antenna 252 is provided to a respective receiver (RCVR) 254a through 254r. Each receiver 254 conditions (e.g., filters, amplifies, and downconverts) a respective received signal, digitizes the conditioned signal to provide samples, and further processes the samples to provide a corresponding "received" symbol stream.

An RX data processor 260 then receives and processes the $N_R$ received symbol streams from $N_R$ receivers 254 based on a particular receiver processing technique to provide $N_T$ "detected" symbol streams. The RX data processor 260 then demodulates, deinterleaves, and decodes each detected symbol stream to recover the traffic data for the data stream. The processing by RX data processor 260 is complementary to that performed by TX MIMO processor 220 and TX data processor 214 at transmitter system 210.

A processor 270 periodically determines which pre-coding matrix to use (discussed below). Processor 270 formulates a reverse link message comprising a matrix index portion and a rank value portion.

The reverse link message may comprise various types of information regarding the communication link and/or the received data stream. The reverse link message is then processed by a TX data processor 238, which also receives traffic data for a number of data streams from a data source 236, modulated by a modulator 280, conditioned by transmitters 254a through 254r, and transmitted back to transmitter system 210.

At transmitter system 210, the modulated signals from receiver system 250 are received by antennas 224, conditioned by receivers 222, demodulated by a demodulator 240, and processed by a RX data processor 242 to extract the reserve link message transmitted by the receiver system 250. Processor 230 then determines which pre-coding matrix to use for determining the beamforming weights then processes the extracted message.

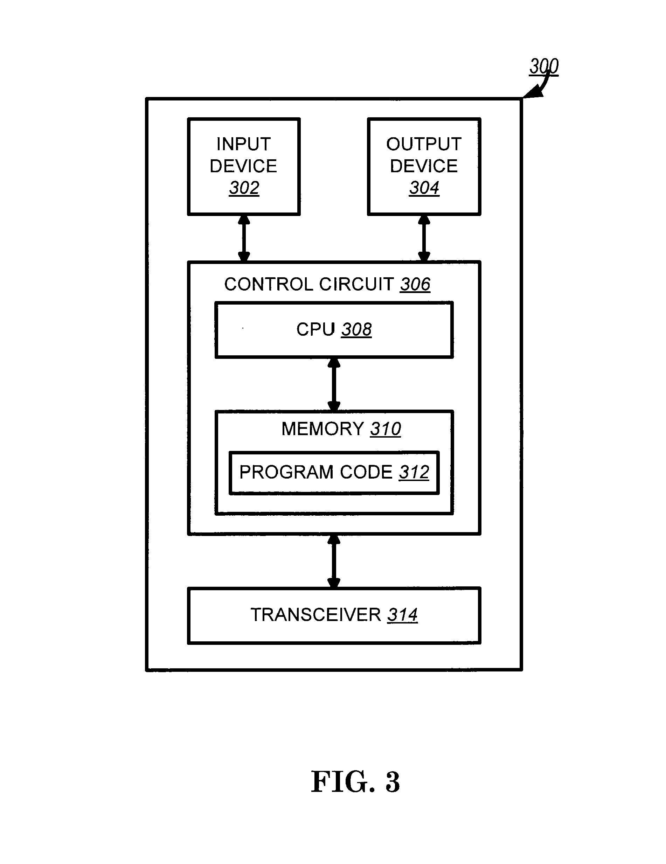

Turning to FIG. 3, this figure shows an alternative simplified functional block diagram of a communication device according to one embodiment of the invention. As shown in FIG. 3, the communication device 300 in a wireless communication system can be utilized for realizing the UEs (or ATs) 116 and 122 in FIG. 1, and the wireless communications system is preferably the LTE system. The communication device 300 may include an input device 302, an output device 304, a control circuit 306, a central processing unit (CPU) 308, a memory 310, a program code 312, and a transceiver 314. The control circuit 306 executes the program code 312 in the memory 310 through the CPU 308, thereby controlling an operation of the communications device 300. The communications device 300 can receive signals input by a user through the input device 302, such as a keyboard or keypad, and can output images and sounds through the output device 304, such as a monitor or speakers. The transceiver 314 is used to receive and transmit wireless signals, delivering received signals to the control circuit 306, and outputting signals generated by the control circuit 306 wirelessly. The communication device 300 in a wireless communication system can also be utilized for realizing the AN 100 in FIG. 1.

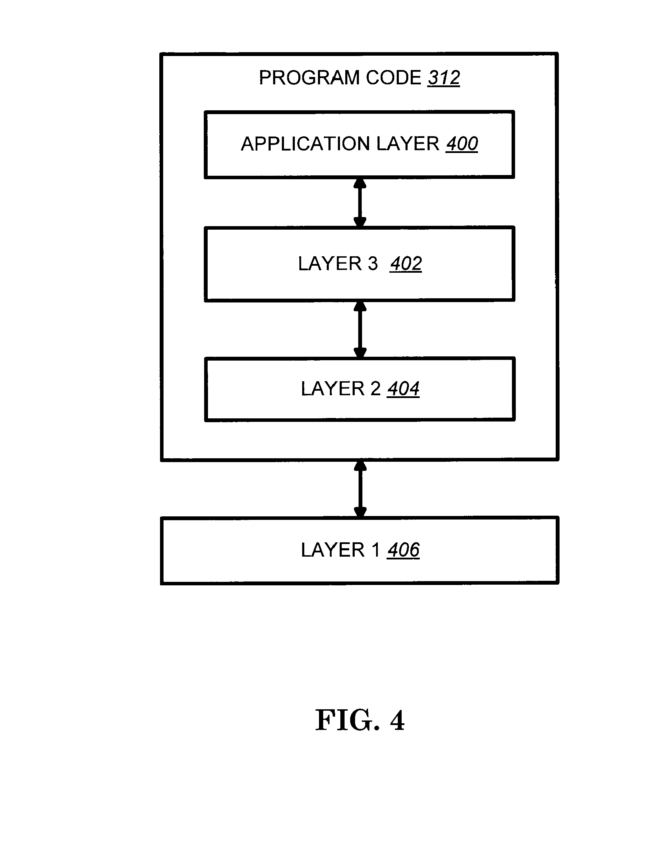

FIG. 4 is a simplified block diagram of the program code 312 shown in FIG. 3 in accordance with one embodiment of the invention. In this embodiment, the program code 312 includes an application layer 400, a Layer 3 portion 402, and a Layer 2 portion 404, and is coupled to a Layer 1 portion 406. The Layer 3 portion 402 generally performs radio resource control. The Layer 2 portion 404 generally performs link control. The Layer 1 portion 406 generally performs physical connections.

3GPP SP-110638 proposes a new study item on proximity-based services (ProSe), i.e., D2D services. 3GPP SP-110638 describes the justification and objective of this study item as follows:

**3 Justification**

Proximity-based applications and services represent a recent and enormous socio-technological trend. The principle of these applications is to discover instances of the applications running in devices that are within proximity of each other, and ultimately also exchange application-related data. In parallel, there is interest in proximity-based discovery and communications in the public safety community.

Current 3GPP specification are only partially suited for such needs, since all such traffic and signalling would have to be routed in the network, thus impacting their performance and adding un-necessary load in the network. These current limitations are also an obstacle to the creation of even more advanced proximity-based applications.

In this context, 3GPP technology, has the opportunity to become the platform of choice to enable proximity-based discovery and communication between devices, and promote a vast array of future and more advanced proximity-based applications.

**4 Objective**

The objective is to study use cases and identify potential requirements for an operator network controlled discovery and communications between devices that are in proximity, under continuous network control, and are under a 3GPP network coverage, for:

    1. Commercial/social use

    2. Network offloading

    3. Public Safety

    4. Integration of current infrastructure services, to assure the consistency of the user experience including reachability and mobility aspects

Additionally, the study item will study use cases and identify potential requirements for

    5. Public Safety, in case of absence of EUTRAN coverage (subject to regional regulation and operator policy, and limited to specific public-safety designated frequency bands and terminals)

Use cases and service requirements will be studied including network operator control, authentication, authorization, accounting and regulatory aspects.

The study does not apply to GERAN or UTRAN.

Furthermore, as discussed in the 3GPP RAN1#77 chairman notes, RAN1#77 meeting assumed that a D2D RNTI (Radio Network Temporary Identifier) is used to distinguish a grant for UL (Uplink) or D2D as follows:

**Working assumption:**

- For Mode 1, DCI format which is same size as existing DCI format 0 is used for allocating D2D Data and SA

    - Same grant for D2D Data and SA

    - For Mode 1, a D2D RNTI is used to distinguish a grant for WAN from grant from D2D

In addition, 3GPP R2-141256 introduced a D2D resource request/grant procedure using random access (RA) procedure and a new MAC (Medium Access Control) control element, called D2D BSR (Buffer Status Reporting), as follows:

### 2.1 Request/grant procedure

This procedure applies only to communication mode 1. When initiating this procedure, the UE has been configured with a logical channel for D2D Communication. It is also assumed that the UE is in RRC_CONNECTED. The purpose of this procedure is for the UE to get a grant from the eNB to transmit on the ProSe physical channel. There are two cases, whether the UE has a PUCCH resource to send the Scheduling Request on or not.

### 2.1.2 The UE does not have a PUCCH resource

In this case the UE needs to perform a random access procedure. We think that the current random access procedure can be reused. Figure 1 shows how the random access procedure is used to support D2D Communication requests and grants.

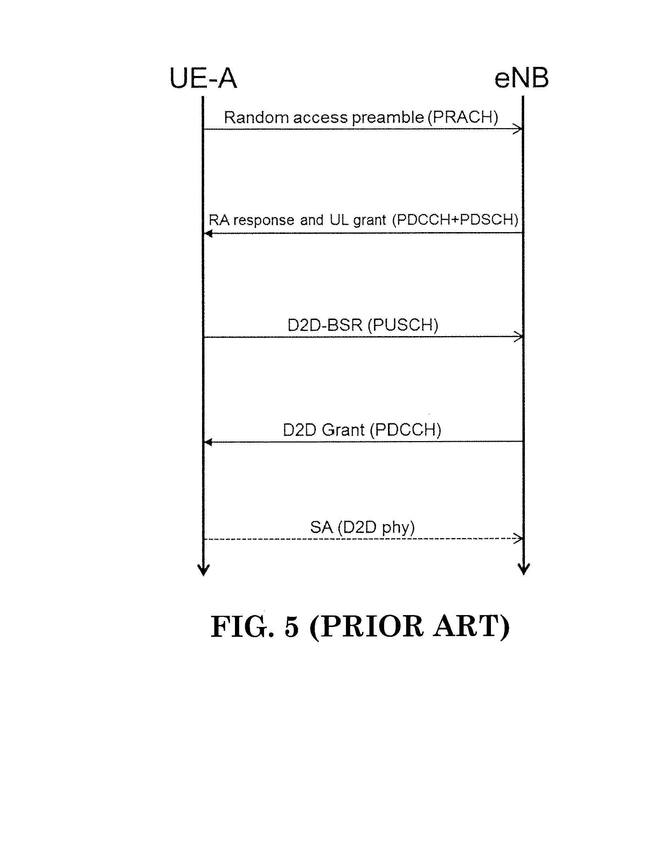

[Figure 2 of 3GPP R2-141256 has been reproduced as FIG. 5 of the present application]

### 2.1.3 The D2D-BSR

The D2D-BSR should be transmitted on the PUSCH similar to legacy BSR. The purpose of the D2D-BSR is for the UE to inform the eNB about the amount of data the UE has on logical channels related to D2D. As mentioned earlier, the eNB configures the UE with a logical channel ID to be used for D2D communication. Although this makes it possible to reuse the existing BSR, it would require at least one logical channel group for D2D communication. If the UE is also configured with legacy LTE bearers and D2D discovery, the four existing logical channel groups may become a restriction.
We think it is better to introduce a new MAC CE, called ProSe BSR, which would be used to indicate the buffer status of D2D services. The exact details of this new BSR are FFS.

### Proposal 3 Introduce a new MAC CE (ProSe BSR) which the UE uses to indicate the buffer status of D2D services.

Also, 3GPP TS36.321 introduced Random Access procedure as follows:

### 5 MAC procedures

### 5.1 Random Access procedure

### 5.1.3 Random Access Preamble transmission

The random-access procedure shall be performed as follows:

- set PREAMBLE_RECEIVED_TARGET_POWER to *preambleInitialReceivedTargetPower* + DELTA_PREAMBLE + (PREAMBLE_TRANSMISSION_COUNTER - 1) * *powerRampingStep*;

- instruct the physical layer to transmit a preamble using the selected PRACH, corresponding RA-RNTI, preamble index and PREAMBLE_RECEIVED_TARGET_POWER.

### 5.1.4 Random Access Response reception

Once the Random Access Preamble is transmitted and regardless of the possible occurrence of a measurement gap, the UE shall monitor the PDCCH of the PCell for Random Access Response(s) identified by the RA-RNTI defined below, in the RA Response window which starts at the subframe that contains the end of the preamble transmission [7] plus three subframes and has length *ra-ResponseWindowSize* subframes. The RA-RNTI associated with the PRACH in which the Random Access Preamble is transmitted, is computed as:

$$RA\text{-}RNTI = 1 + t\_id + 10 * f\_id$$

Where t_id is the index of the first subframe of the specified PRACH ($0 \leq$ t_id <10), and f_id is the index of the specified PRACH within that subframe, in ascending order of frequency domain ($0 \leq$ f_id< 6). The UE may stop monitoring for Random Access Response(s) after successful reception of a Random Access Response containing Random Access Preamble identifiers that matches the transmitted Random Access Preamble.

- If a downlink assignment for this TTI has been received on the PDCCH for the RA-RNTI and the received TB is successfully decoded, the UE shall regardless of the possible occurrence of a measurement gap:

- if the Random Access Response contains a Backoff Indicator subheader:

  - set the backoff parameter value in the UE as indicated by the BI field of the Backoff Indicator subheader and Table 7.2-1.

- else, set the backoff parameter value in the UE to 0 ms.

- if the Random Access Response contains a Random Access Preamble identifier corresponding to the transmitted Random Access Preamble (see subclause 5.1.3), the UE shall:

    - consider this Random Access Response reception successful and apply the following actions for the serving cell where the Random Access Preamble was transmitted:

        - process the received Timing Advance Command (see subclause 5.2);

        - indicate the *preambleInitialReceivedTargetPower* and the amount of power ramping applied to the latest preamble transmission to lower layers (i.e., (PREAMBLE_TRANSMISSION_COUNTER -1) * *powerRampingStep*);

        - process the received UL grant value and indicate it to the lower layers;

    - if ra-PreambleIndex was explicitly signalled and it was not 000000 (i.e., not selected by MAC):

        - consider the Random Access procedure successfully completed.

    - else, if the Random Access Preamble was selected by UE MAC:

        - set the Temporary C-RNTI to the value received in the Random Access Response message no later than at the time of the first transmission corresponding to the UL grant provided in the Random Access Response message;

        - if this is the first successfully received Random Access Response within this Random Access procedure:

            - if the transmission is not being made for the CCCH logical channel, indicate to the Multiplexing and assembly entity to include a C-RNTI MAC control element in the subsequent uplink transmission;

            - obtain the MAC PDU to transmit from the "Multiplexing and assembly" entity and store it in the Msg3 buffer.

NOTE: When an uplink transmission is required, e.g., for contention resolution, the eNB should not provide a grant smaller than 56 bits in the Random Access Response.

NOTE: If within a Random Access procedure, an uplink grant provided in the Random Access Response for the same group of Random Access Preambles has a different size than the first uplink grant allocated during that Random Access procedure, the UE behavior is not defined.

If no Random Access Response is received within the RA Response window, or if none of all received Random Access Responses contains a Random Access Preamble identifier corresponding to the transmitted Random Access Preamble, the Random Access Response reception is considered not successful and the UE shall:

- increment PREAMBLE_TRANSMISSION_COUNTER by 1;

- If PREAMBLE_TRANSMISSION_COUNTER = *preambleTransMax* + 1:

    - if the Random Access Preamble is transmitted on the PCell:

        - indicate a Random Access problem to upper layers;

    - if the Random Access Preamble is transmitted on an SCell:

        - consider the Random Access procedure unsuccessfully completed.

    - if in this Random Access procedure, the Random Access Preamble was selected by MAC:

        - based on the backoff parameter in the UE, select a random backoff time according to a uniform distribution between 0 and the Backoff Parameter Value;

        - delay the subsequent Random Access transmission by the backoff time;

    - proceed to the selection of a Random Access Resource (see subclause 5.1.2).

**5.1.5 Contention Resolution**

Contention Resolution is based on either C-RNTI on PDCCH of the PCell or UE Contention Resolution Identity on DL-SCH.

Once Msg3 is transmitted, the UE shall:

- start *mac-ContentionResolutionTimer* and restart *mac-ContentionResolutionTimer* at each HARQ retransmission;

- regardless of the possible occurrence of a measurement gap, monitor the PDCCH until *mac-ContentionResolutionTimer* expires or is stopped;

- if notification of a reception of a PDCCH transmission is received from lower layers, the UE shall:

    - if the C-RNTI MAC control element was included in Msg3:

        - if the Random Access procedure was initiated by the MAC sublayer itself and the PDCCH transmission is addressed to the C-RNTI and contains an UL grant for a new transmission; or

        - if the Random Access procedure was initiated by a PDCCH order and the PDCCH transmission is addressed to the C-RNTI:

            - consider this Contention Resolution successful;

            - stop *mac-ContentionResolutionTimer;*

            - discard the Temporary C-RNTI;

            - consider this Random Access procedure successfully completed.

    - else if the CCCH SDU was included in Msg3 and the PDCCH transmission is addressed to its Temporary C-RNTI:

        - if the MAC PDU is successfully decoded:

            - stop *mac-ContentionResolutionTimer;*

            - if the MAC PDU contains a UE Contention Resolution Identity MAC control element; and

            - if the UE Contention Resolution Identity included in the MAC control element matches the CCCH SDU transmitted in Msg3:

                - consider this Contention Resolution successful and finish the disassembly and demultiplexing of the MAC PDU;

                - set the C-RNTI to the value of the Temporary C-RNTI;

                - discard the Temporary C-RNTI;

                - consider this Random Access procedure successfully completed.

        - else

            - discard the Temporary C-RNTI;

            - consider this Contention Resolution not successful and discard the successfully decoded MAC PDU.

    - if *mac-ContentionResolutionTimer* expires:

        - discard the Temporary C-RNTI;

        - consider the Contention Resolution not successful.

    - if the Contention Resolution is considered not successful the UE shall:

        - flush the HARQ buffer used for transmission of the MAC PDU in the Msg3 buffer;

        - increment PREAMBLE_TRANSMISSION_COUNTER by 1;

        - If PREAMBLE_TRANSMISSION_COUNTER = *preambleTransMax* + 1:

            - indicate a Random Access problem to upper layers.

        - based on the backoff parameter in the UE, select a random backoff time according to a uniform distribution between 0 and the Backoff Parameter Value;

        - delay the subsequent Random Access transmission by the backoff time;

        - proceed to the selection of a Random Access Resource (see subclause 5.1.2).

In general, in the legacy LTE random access procedure, a UE would transmit to the network an Msg3 that includes a C-RNTI (Cell Radio Network Temporary Identifier) MAC control element, and would consider the contention resolution successful if a PDCCH (Physical Downlink Control Channel) transmission addressed to the C-RNTI containing an UL grant for a new transmission is received. Basically, a potential contention would be resolved if the C-RNTI in Msg3 matches the C-RNTI scrambled with Msg4. A random access procedure for D2D is considered below.

Since a D2D-RNTI is introduced to distinguish a D2D grant from a UL grant (as discussed in 3GPP RAN1#77 chairman's notes), the eNB could use a PDCCH transmission addressed to the D2D-RNTI to allocate D2D grant for the UE in Msg4 of a random access procedure. Based on the same principle of contention resolution in a LTE random access procedure, a potential method would be to include a D2D-RNTI MAC control element in Msg3. But, this method may need to introduce a new LCID (Logical Channel ID) value for the D2D-RNTI MAC control element.

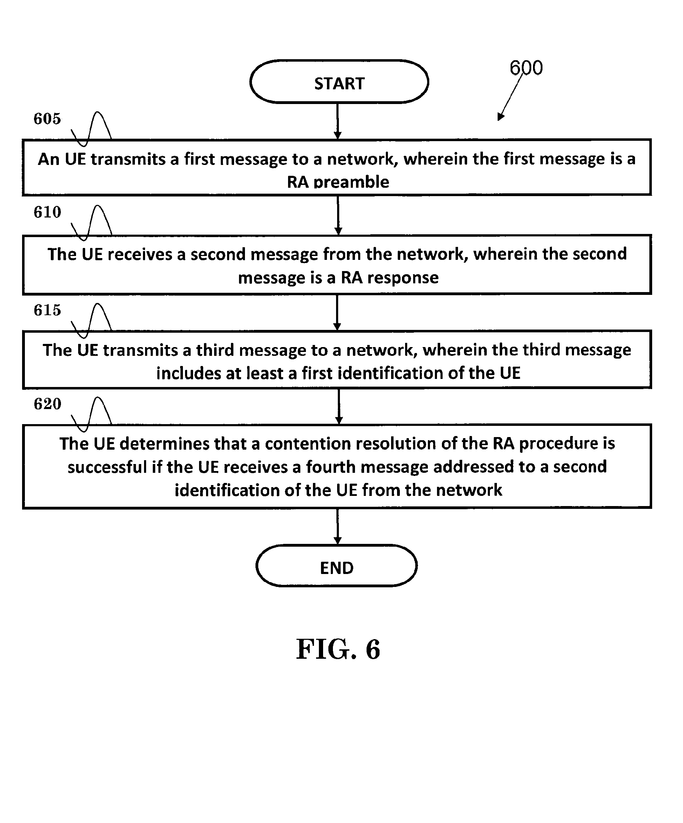

FIG. 6 is a flow chart 600 in accordance with one exemplary embodiment according to the invention from the perspective of a UE. In step 605, an UE transmits a first message to a network, wherein the first message is a RA preamble. In step 610, the UE receives a second message from the network, wherein the second message is a RA response.

In step 615, the UE transmits a third message to a network, wherein the third message includes at least a first identification of the UE. Preferably, the UE could be configured with the first identification by the network before the RA procedure is initiated.

In step 620, the UE determines that a contention resolution of the RA procedure is successful if the UE receives a fourth message addressed to a second identification of the UE from the network. Preferably, the UE could be configured with the second identification by the network before the RA procedure is initiated.

Preferably, the first identification could be a C-RNTI; and the second identification could be a D2D-RNTI. Furthermore, the first identification could be a C-RNTI MAC control element.

Preferably, the third message could further include a D2D BSR MAC (Device-to-Device Buffer Status Report Media Access Control) control element. Furthermore, the third message could be an Msg3 message. In addition, the third message could be transmitted according to an uplink grant included in the second message.

Preferably, the fourth message could be a PDCCH (Physical Downlink Control Channel) transmission which contains at least a D2D grant for D2D communication. Furthermore, the D2D grant could be used for a new transmission or a retransmission of the D2D communication.

Referring back to FIGS. 3 and 4, the device 300 includes a program code 312 stored in memory 310 of a UE. In one embodiment, the CPU 308 could execute program code 312 to enable the UE (i) to transmit a third message to a network, wherein the third message includes at least a first identification of the UE., and (ii) to determine that a contention resolution of the RA procedure is successful if the UE receives a fourth message addressed to a second identification of the UE from the network. Furthermore, the CPU 308 could further execute program code 312 to enable the UE to transmit a first message to the network, wherein the first message is a RA preamble, and/or to receive a second message from the network, wherein the second message is a RA response.

In addition, the CPU 308 can execute the program code 312 to perform all of the above-described actions and steps or others described herein , in particular those described in paragraphs [0037] to [0042] above.

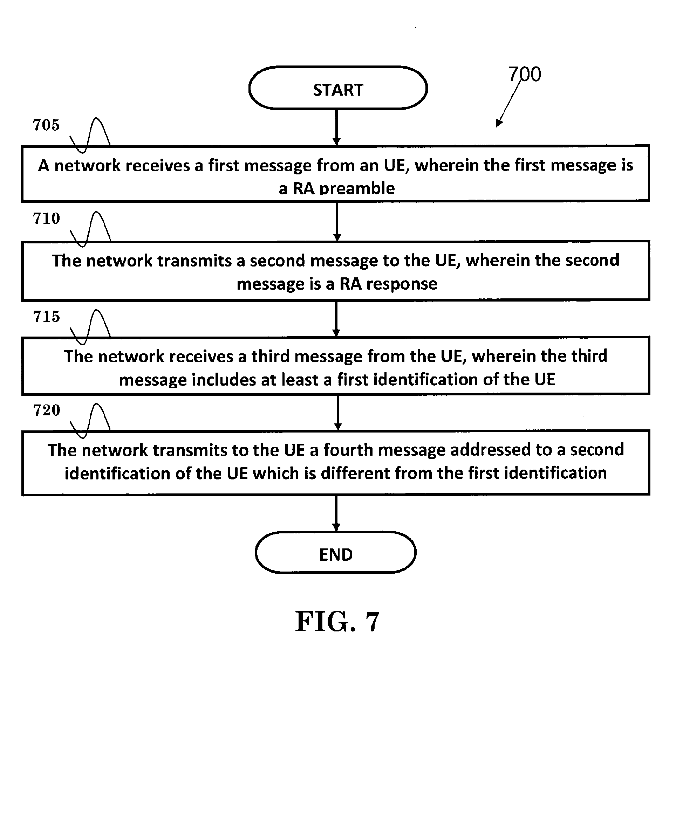

FIG. 7 is a flow chart 700 in accordance with one exemplary embodiment according to the invention from the perspective of a network. In step 705, a network receives a first message from a user equipment (UE), wherein the first message is a RA preamble. In step 710, the network transmits a second message to the UE, wherein the second message is a RA response.

In step 715, the network receives a third message from the UE, wherein the third message includes at least a first identification of the UE. Preferably, the network could configure the UE with the first identification before the RA procedure is initiated.

In step 720, the network transmits a fourth message to the UE, wherein the fourth message is addressed to a second identification of the UE which is different from the first identification. Preferably, the network could configure the UE with the second identification before the RA procedure is initiated.

Preferably, the first identification could be a C-RNTI; and the second identification could be a D2D-RNTI. Furthermore, the first identification could be a C-RNTI MAC control element.

Preferably, the third message could further include a D2D BSR MAC control element. Furthermore, the third message could be an Msg3 message. In addition, the third message could be transmitted according to an uplink grant included in the second message.

Preferably, the fourth message could be a PDCCH transmission which contains at least a D2D grant for D2D communication. Furthermore, the D2D grant could be used for a new transmission or a retransmission of the D2D communication.

Referring back to FIGS. 3 and 4, the device 300 includes a program code 312 stored in memory 310 of a network. In one embodiment, the CPU 308 could execute program code 312 to enable the network (i) to receive a third message from a UE, wherein the third message includes at least a first identification of the UE, and (ii) to transmit a fourth message to the UE, wherein the fourth message is addressed to a second identification of the UE which is different from the first identification. Furthermore, the CPU 308 could further execute program code 312 to enable the network to receive a first message from the UE, wherein the first message is a RA preamble, and/or to transmit a second message to the UE, wherein the second message is a RA response.

In addition, the CPU 308 could execute the program code 312 to perform all of the above-described actions and steps or others described herein, in particular those described in paragraphs [0045] to [0050] above.

Various aspects of the disclosure have been described above. It should be apparent that the teachings herein may be embodied in a wide variety of forms and that any specific structure, function, or both being disclosed herein is merely representative. Based on the teachings herein one skilled in the art should appreciate that an aspect disclosed herein may be implemented independently of any other aspects and that two or more of these aspects may be combined in various ways , in particular a system according to the invention preferably combines both exemplary embodiments according to the invention. For example, an apparatus may be implemented or a method may be practiced using any number of the aspects set forth herein. In addition, such an apparatus may be implemented or such a method may be practiced using other structure, functionality, or structure and functionality in addition to or other than one or more of the aspects set forth herein. As an example of some of the above concepts, in some aspects concurrent channels may be established based on pulse repetition frequencies. In some aspects concurrent channels may be established based on pulse position or offsets. In some aspects concurrent channels may be established based on time hopping sequences. In some aspects concurrent channels may be established based on pulse repetition frequencies, pulse positions or offsets, and time hopping sequences.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, processors, means, circuits, and algorithm steps described in connection with the aspects disclosed herein may be implemented as electronic hardware (e.g., a digital implementation, an analog implementation, or a combination of the two, which may be designed using source coding or some other technique), various forms of program or design code incorporating instructions (which may be referred to herein, for convenience, as "software" or a "software module"), or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

In addition, the various illustrative logical blocks, modules, and circuits described in connection with the aspects disclosed herein may be implemented within or performed by an integrated circuit ("IC"), an access terminal, or an access point. The IC may comprise a general purpose processor, a digital signal processor (DSP), an application specific integrated circuit (ASIC), a field programmable gate array (FPGA) or other programmable logic device, discrete gate or transistor logic, discrete hardware components, electrical components, optical components, mechanical components, or any combination thereof designed to perform the functions described herein, and may execute codes or instructions that reside within the IC, outside of the IC, or both. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

It is understood that any specific order or hierarchy of steps in any disclosed process is an example of a sample approach. Based upon design preferences, it is understood that the specific order or hierarchy of steps in the processes may be rearranged while remaining within the scope of the present disclosure. The accompanying method claims present elements of the various steps in a sample order, and are not meant to be limited to the specific order or hierarchy presented.

The steps of a method or algorithm described in connection with the aspects disclosed herein may be embodied directly in hardware, in a software module executed by a processor, or in a combination of the two. A software module (e.g., including executable instructions and related data) and other data may reside in a data memory such as RAM memory, flash memory, ROM memory, EPROM memory, EEPROM memory, registers, a hard disk, a removable disk, a CD-ROM, or any other form of computer-readable storage medium known in the art. A sample storage medium may be coupled to a machine such as, for example, a computer/processor (which may be referred to herein, for convenience, as a "processor") such the processor can read information (e.g., code) from and write information to the storage medium. A sample storage medium may be integral to the processor. The processor and the storage medium may reside in an ASIC. The ASIC may reside in user equipment. In the alternative, the processor and the storage medium may reside as discrete components in user equipment. Moreover, in some aspects any suitable computer-program product may comprise a computer-readable medium comprising codes relating to one or more of the aspects of the disclosure. In some aspects a computer program product may comprise packaging materials.

While the invention has been described in connection with various aspects, it will be understood that the invention is capable of further modifications. This application is intended to cover any variations, uses or adaptation of the invention following, in general, the principles of the invention, and including such departures from the present disclosure as come within the known and customary practice within the art to which the invention pertains.

**Claims**

1. A method of a User Equipment, in the following also referred to as UE, for performing a random access, in the following also referred to as RA, procedure for a device-to-device, in the following also referred to as D2D, communication, comprising:

   the UE transmits a third message to a network, wherein the third message includes at least a first identification of the UE (615); and
   the UE determines that a contention resolution of the RA procedure is successful if the UE receives a fourth message addressed to a second identification of the UE from the network, wherein the first identification is different from the second identification (620).

2. The method of claim 1, further comprising:

   the UE is configured with the first identification and/or the second identification by the network before the RA procedure is initiated.

3. The method of claim 1 or 2, further comprising:

   the UE transmits a first message to the network, wherein the first message is a RA preamble (605).

4. The method of any one of the preceding claims, further comprising:

   the UE receives a second message from the network, wherein the second message is a RA response (610).

5. A method of a network for performing a random access, in the following also referred to as RA, procedure for a device-to-device, in the following also referred to as D2D, communication, comprising:

   the network receives a third message from a user equipment, in the following also referred to as UE, wherein the third message includes at least a first identification of the UE (715); and
   the network transmits a fourth message to the UE in response to reception of the third message, wherein the fourth message is addressed to a second identification of the UE which is different from the first identification (720).

6. The method of claim 5, further comprising:

   the network configures the UE with the first identification and/or the second identification before the RA procedure is initiated.

7. The method of claim 5 or 6, further comprising:

   the network receives a first message from the UE, wherein the first message is a RA preamble (705).

8. The method of any one of claims 5 to 7, further comprising:

   the network transmits a second message to the UE, wherein the second message is a RA response (710).

9. The method of any one of the preceding claims, wherein the first identification is a Cell Radio Network Temporary Identifier, in the following also referred to as C-RNTI, and the second identification is a Device-to-Device Radio Network Temporary Identifier, in the following also referred to as D2D-RNTI.

10. The method of any one of the preceding claims, wherein the first identification is a Cell Radio Network Temporary Identifier Media Access Control, in the following also referred to as C-RNTI MAC, control element.

11. The method of any one of the preceding claims, wherein the third message further includes Device-to-Device Buffer Status Report Media Access Control, in the following also referred to as a D2D BSR MAC, control element.

12. The method of any one of the preceding claims, wherein the third message is an Msg3 message.

13. The method of any one of the preceding claims, wherein the fourth message is a Physical Downlink Control Channel, in the following also referred to as PDCCH, transmission which contains at least a Device-to-Device, in the following also referred to as D2D, grant for the D2D communication.

14. A communication device (300) for performing a random access, in the following also referred to as RA, procedure for a device-to-device, in the following also referred to as D2D, communication, the communication device (300) comprising:

   a control circuit (306);
   a processor (308) installed in the control circuit (306); and
   a memory (310) installed in the control circuit (306) and operatively coupled to the processor (308);

wherein the processor (308) is configured to execute a program code (312) stored in the memory (310) to enable the communication device (300) to perform the method steps as defined in anyone of claims 1 to 13.

FIG. 1

FIG. 2

_300_

```
┌─────────────────────────────────────────────────────┐
│   ┌──────────────┐          ┌──────────────┐         │
│   │    INPUT     │          │   OUTPUT     │         │
│   │   DEVICE     │          │   DEVICE     │         │
│   │    302       │          │    304       │         │
│   └──────┬───────┘          └──────┬───────┘         │
│          ↕                         ↕                 │
│   ┌──────────────────────────────────────────┐      │
│   │   CONTROL CIRCUIT 306                     │      │
│   │   ┌──────────────────────────────────┐   │      │
│   │   │          CPU 308                 │   │      │
│   │   └────────────────┬─────────────────┘   │      │
│   │                    ↕                     │      │
│   │   ┌──────────────────────────────────┐   │      │
│   │   │        MEMORY 310                │   │      │
│   │   │   ┌──────────────────────────┐   │   │      │
│   │   │   │ PROGRAM CODE 312         │   │   │      │
│   │   │   └──────────────────────────┘   │   │      │
│   │   └──────────────────────────────────┘   │      │
│   └──────────────────┬───────────────────────┘      │
│                      ↕                               │
│   ┌──────────────────────────────────────────┐      │
│   │         TRANSCEIVER 314                   │      │
│   └──────────────────────────────────────────┘      │
└─────────────────────────────────────────────────────┘
```

# FIG. 3

PROGRAM CODE *312*

APPLICATION LAYER *400*

LAYER 3 *402*

LAYER 2 *404*

LAYER 1 *406*

**FIG. 4**

UE-A                                                eNB

Random access preamble (PRACH)

RA response and UL grant (PDCCH+PDSCH)

D2D-BSR (PUSCH)

D2D Grant (PDCCH)

SA (D2D phy)

## FIG. 5 (PRIOR ART)

START

600

605

An UE transmits a first message to a network, wherein the first message is a RA preamble

610

The UE receives a second message from the network, wherein the second message is a RA response

615

The UE transmits a third message to a network, wherein the third message includes at least a first identification of the UE

620

The UE determines that a contention resolution of the RA procedure is successful if the UE receives a fourth message addressed to a second identification of the UE from the network

END

FIG. 6

START

700

A network receives a first message from an UE, wherein the first message is a RA preamble

The network transmits a second message to the UE, wherein the second message is a RA response

The network receives a third message from the UE, wherein the third message includes at least a first identification of the UE

The network transmits to the UE a fourth message addressed to a second identification of the UE which is different from the first identification

END

FIG. 7

Europäisches
Patentamt

European
Patent Office

Office européen
des brevets

## EUROPEAN SEARCH REPORT

Application Number

EP 15 17 4533

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2014/092616 A1 (ERICSSON TELEFON AB L M [SE]) 19 June 2014 (2014-06-19) | 1,3-5, 7-9, 11-14 | INV. H04W74/08 |
| Y | * page 4, line 29 - line 31 * | 2,6 | ADD. |
| A | * page 5, line 11 - line 13 * <br> * page 6, line 33 - line 35 * <br> * page 7, line 33 - line 35 * <br> * page 9, line 30 - line 33 * <br> * page 10, line 23 - line 27 * <br> * page 11, line 4 - line 9 * <br> * page 13, line 20 - line 26 * <br> * page 14, line 11 - line 18 * <br> * page 14, line 1 - line 5 * <br> ----- | 10 | H04W92/18 |
| X | ERICSSON: "Resource allocation for D2D transmitters in coverage", 3GPP DRAFT; R2-140625 - RESOURCE ALLOCATION FOR D2D TRANSMITTERS IN COVERAGE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS C , vol. RAN WG2, no. Prague, Czech Republic; 20140210 - 20140214 9 February 2014 (2014-02-09), XP050791937, Retrieved from the Internet: URL:http://www.3gpp.org/ftp/Meetings_3GPP_SYNC/RAN2/Docs/ [retrieved on 2014-02-09] | 1,5, 9-11,13, 14 | |
| Y | * page 2, paragraph 2.1.1.1; tables 6.2.1-2 * | 2,6 | |
| A | * Proposal 1; page 2, paragraph 2.1.1.1 * <br> * step 1.1 - 1.4; page 3, paragraph 2.1.1.4 * <br> * page 3, line 6, paragraph 2.1.1.4 - line 7 * <br> ----- | 3,4,7,8, 12 | |

TECHNICAL FIELDS SEARCHED (IPC)

H04W

-/--

The present search report has been drawn up for all claims

| Place of search | Date of completion of the search | Examiner |
|---|---|---|
| The Hague | 24 September 2015 | Lebiedowski, Adam |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 15 17 4533

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | NEC: "Cell specific RNTI for scrambling codes for D2D purpose", 3GPP DRAFT; R2-140093__REL12_SI_D2D_CELLSPECIFICSCRAMB LINGCODE_FOR_D2D, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; , vol. RAN WG2, no. Prague, Czech Republic; 20140210 - 20140214 9 February 2014 (2014-02-09), XP050791524, Retrieved from the Internet: URL:http://www.3gpp.org/ftp/Meetings_3GPP_ SYNC/RAN2/Docs/ [retrieved on 2014-02-09] | 2,6 | |
| A | * steps 1, 1bis, Proposal 1; page 3, paragraph 2.2.1.3 * ----- | 1,3-5, 7-14 | |
| | -/-- | | TECHNICAL FIELDS SEARCHED (IPC) |

The present search report has been drawn up for all claims

| Place of search | Date of completion of the search | Examiner |
|---|---|---|
| The Hague | 24 September 2015 | Lebiedowski, Adam |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
 
& : member of the same patent family, corresponding
   document

EPO FORM 1503 03.82 (P04C01)

**Europäisches Patentamt**
**European Patent Office**
**Office européen des brevets**

# EUROPEAN SEARCH REPORT

**Application Number**

EP 15 17 4533

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HUAWEI ET AL: "D2D BSR Triggering and Sending Mechanism", 3GPP DRAFT; R2-142229 D2D BSR TRIGGERING AND SENDING MECHANISM, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Seoul, Korea; 20140519 - 20140523 18 May 2014 (2014-05-18), XP050793416, Retrieved from the Internet: URL:http://www.3gpp.org/ftp/Meetings_3GPP_SYNC/RAN2/Docs/ [retrieved on 2014-05-18] * page 2; figure 1 * * Proposal 5; page 2, paragraph 3 * | 1-14 | |
| A | EP 2 688 226 A2 (LG ELECTRONICS INC [KR]) 22 January 2014 (2014-01-22) * page 22, paragraph [0202] - page 23, paragraph [0203] * * figure 13 * | 1-14 | TECHNICAL FIELDS SEARCHED (IPC) |
| A | WO 2013/025040 A2 (LG ELECTRONICS INC [KR]; PARK KYUJIN [KR]; JANG JIWOONG [KR]; CHO HANG) 21 February 2013 (2013-02-21) * the whole document * -& US 2015/071189 A1 (PARK KYUJIN [KR] ET AL) 12 March 2015 (2015-03-12) * page 5, paragraph [0068] - paragraph [0072] * | 1-14 | |

The present search report has been drawn up for all claims

| Place of search | Date of completion of the search | Examiner |
|---|---|---|
| The Hague | 24 September 2015 | Lebiedowski, Adam |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..........................................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 15 17 4533

This annex lists the patent family members relating to the patent documents cited in the above-mentioned European search report.
The members are as contained in the European Patent Office EDP file on
The European Patent Office is in no way liable for these particulars which are merely given for the purpose of information.

24-09-2015

| Patent document cited in search report | | Publication date | Patent family member(s) | | Publication date |
|---|---|---|---|---|---|
| WO 2014092616 | A1 | 19-06-2014 | CN<br>EP<br>PH<br>WO | 104854947 A<br>2932780 A1<br>12015500959 A1<br>2014092616 A1 | 19-08-2015<br>21-10-2015<br>27-07-2015<br>19-06-2014 |
| EP 2688226 | A2 | 22-01-2014 | EP<br>KR<br>US<br>WO | 2688226 A2<br>20140017563 A<br>2014064203 A1<br>2012128505 A2 | 22-01-2014<br>11-02-2014<br>06-03-2014<br>27-09-2012 |
| WO 2013025040 | A2 | 21-02-2013 | US<br>WO | 2015071189 A1<br>2013025040 A2 | 12-03-2015<br>21-02-2013 |
| US 2015071189 | A1 | 12-03-2015 | US<br>WO | 2015071189 A1<br>2013025040 A2 | 12-03-2015<br>21-02-2013 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62019051 A

**Non-patent literature cited in the description**

- WID on Proposal for a study on Proximity-based Services. *RAN1#77 Chairman's Notes; SP-110638*
- Layer 2 procedures for D2D Communication. *R2-141256*
- Medium Access Control (MAC) protocol specification. *TS 36.321 V11.2.0*